# EUROPÄISCHE PATENTSCHRIFT

(11) **EP 2 283 268 B1**
(45) Veröffentlichungstag und Bekanntmachung des Hinweises auf die Patenterteilung: **09.05.2012**
(21) Anmeldenummer: 09779618.9
(22) Anmeldetag: 03.06.2009
(51) Int. Cl.: F16L 37/088

(54) **STECKKUPPLUNG FÜR DRUCKMITTEL-LEITUNGEN**
PLUG-IN COUPLING FOR PRESSURE-MEDIUM LINES
ELEMENT DE COUPLAGE ENFICHABLE POUR CONDUITES D'AGENT SOUS PRESSION

(30) Priorität: 14.07.2008 DE 202008009398 U; 14.07.2008 DE 202008009399 U
(43) Veröffentlichungstag der Anmeldung: 16.02.2011
(60) Teilanmeldung: 12160559.6
(73) Patentinhaber: Voss Automotive GmbH, 51688 Wipperfürth (DE)
(72) Erfinder: LECHNER, Martin, 51789 Lindlar (DE); SCHWARZKOPF, Otfried, 51515 Kürten (DE); HAGEN, Harald, 51688 Wipperfürth (DE); SUHR, Andreas, 51789 Lindlar (DE)
(74) Vertreter: Patentanwälte Dr. Solf & Zapf
(86) Internationale Anmeldenummer: PCT/EP2009/056794
(87) Internationale Veröffentlichungsnummer: WO 2010/006838

(56) Entgegenhaltungen:
- EP-A1- 0 226 689
- EP-A1- 0 751 332
- EP-A1- 1 770 320
- WO-A1-92/00485
- WO-A1-97/13094
- DE-C1- 10 125 243

## Beschreibung

Die vorliegende Erfindung betrifft eine Steckkupplung für Druckmittel-Leitungen gemäß dem Oberbegriff des unabhängigen Anspruchs 1.

Derartige Steckkupplungen werden insbesondere in Kraftfahrzeug-Bremssystemen, hauptsächlich bei LKW-Luftdruckbremsanlagen, eingesetzt. Hierbei besteht das Problem, dass in manchen Fällen, vor allem bei ungünstigen Platzverhältnissen bzw. Einbausituationen, vom Monteur beim Stecken nicht sorgfältig genug auf ein korrektes, vollständiges Stecken geachtet wird, so dass in der Praxis Prüfvorgänge eingeschaltet werden müssen, um zu verhindern, dass beim Aufbau des vollen Bremsdruckes die Steckkupplung plötzlich ungewollt getrennt wird. Dieser Fall könnte beispielsweise auftreten, wenn das Steckerteil über einen zur Abdichtung vorhandenen Dichtring (O-Ring) kraftschlüssig gehalten, das Rastelement aber noch nicht eingerastet ist.

Steckkupplungen der eingangs definierten, gattungsgemäßen Art sind beispielsweise in den Veröffentlichungen DE 196 21 535 A1, EP 081 0399, EP 0 813 017 A2 und EP 0 913 618 A1 beschrieben. Bei jeder dieser bekannten Steckkupplungen ist zur Vermeidung der beschriebenen Probleme schon im noch nicht ganz korrekt gesteckten Zustand der Kupplungsteile eine "Vorrastung" gewährleistet, die es verhindert, dass bei voller Druckbeaufschlagung die Kupplung ganz getrennt wird. Dabei ist in dieser Vorraststellung eine Undichtigkeit derart gewährleistet, dass dieser Zustand z. B. akustisch durch ein Leckagegeräusch wahrnehmbar ist, ohne dass es zu einem vollständigen, plötzlichen Druckabfall durch vollständiges Trennen der Kupplungsteile kommen kann. Die Kupplung kann dann bei Auftreten des Leckagegeräusches weiter in die korrekt abgedichtete und arretierte "Vollraststellung" überführt werden. Bei jeder dieser bekannten Steckkupplungen ist innerhalb der Aufnahmeöffnung des Gehäuseteils ein Doppelrastelement mit zwei axial mit Abstand hintereinander angeordneten Rastelementen angeordnet. Der Steckerschaft weist eine als in axialer Richtung gesehen sehr breite Ringnut ausgebildete, radiale Rastausnehmung auf, die einseitig derart von einer Halteflanke begrenzt wird, dass in der Vorraststellung zunächst nur das erste Rastelement radial in die Rastausnehmung einrastet und dabei die Halteflanke so hintergreift, dass der Steckerschaft gegen Lösen gesichert ist. Durch fortgesetztes Einstecken des Steckerschaftes rastet dann nachfolgend in der Vollraststellung auch das zweite Rastelement radial in die Rastausnehmung ein, so dass dann die Halteflanke von dem zweiten Rastelement hintergriffen wird. Das erste Rastelement ist dann auch noch innerhalb der Rastausnehmung angeordnet, allerdings in einem axial von der Halteflanke entfernten Bereich, so dass das erste Rastelement in der Vollraststellung keine Haltefunktion mehr hat. Diese bekannte Art von Steckkupplung hat sich im praktischen Einsatz recht gut bewährt. Allerdings kann es beim Einstecken des Steckerschaftes zu einem Verkippen relativ zur Achse der Aufnahmeöffnung kommen, wodurch das Einstecken beeinträchtigt werden kann.

Außerdem sind auch andere, nicht gattungsgemäße Steckkupplungen bekannt, die zwar auch für eine "Doppelrastung" bzw. Zweifach-Rastung in einer Vorraststellung und einer Vollraststellung ausgelegt sind, allerdings nach anderen Funktionsprinzipien.

Beispielsweise beschreibt die EP 0 226 689 B1 eine Kupplungsvorrichtung, die nur ein einzelnes Rastelement in Form eines Verriegelungsrings aufweist, der nach Art eines Drahtsprengrings aus einem im Querschnitt kreisförmigen Federdraht gebogen ist. In einer ersten Ausführungsform ist der Verriegelungsring in einer Aussparung des Gehäuseteils, dort "Mutterstück" genannt, angeordnet und wirkt für Vor- und Vollraststellung nacheinander mit zwei separaten, ringnutförmigen Ausnehmungen des Steckerteils, dort "Gegenstück" genannt, zusammen. In einer zweiten Ausführungsform ist der Verriegelungsring auf dem Stecker (Gegenstück) angeordnet und wirkt mit zwei ringnutförmigen Aussparungen im Gehäuseteil (Mutterstück) zusammen.

Das Dokument WO 92/00485 A1 beschreibt eine Rohrkupplung mit einem Aufnahmeteil und einem am Ende eines Rohres angeordneten Steckerschaft, der mehrere, und zwar konkret drei axial hintereinander angeordnete, radiale Umfangsrippen aufweist. Innerhalb einer Aufnahmebohrung des Aufnahmeteils sind zwei Dichtungs-O-Ringe gelagert, und axial zwischen den O-Ringen und der Mündung der Öffnung sind an der Innenwandung der Öffnung mehrere, und zwar konkret fünf hintereinanderliegende, elastisch nachgiebige (resilient) Lippen angeformt, die sich derart schräg nach innen erstrecken, dass sie beim Einstecken des Steckerschaftes widerhakenartig mit dessen Umfangsrippen zusammenwirken, um den Steckerschaft in der Aufnahmeöffnung gegen Lösen zu halten. Eine Abdichtung dieser Steckverbindung ist erst gegeben, wenn der Steckerschaft bis über den Bereich der O-Ringe hinaus eingeschoben ist. Vorher ist eine völlig undefinierte Undichtigkeit gegeben, weil die drei Umfangsrippen des Steckers in Kombination mit den fünf elastischen Lippen in der Aufnahmeöffnung eine Vielzahl von unterschiedlichen Relativstellungen ergeben, in denen der Stecker fixierbar ist. Folglich ist bei dieser Steckverbindung nicht nur eine Vorraststellung und eine Vollraststellung definiert. Zudem ist der Stecker während des Einsteckens über die elastisch nachgiebigen Lippen nur sehr schlecht geführt.

Der vorliegenden Erfindung liegt die Aufgabe zu Grunde, eine Steckkupplung der speziellen gattungsgemäßen Art bezüglich der Gebrauchseigenschaften weiter zu verbessern.

Erfindungsgemäß wird dies durch die Merkmale des unabhängigen Anspruchs 1 erreicht. Vorteilhafte Ausgestaltangen sind in den abhängigen Ansprüchen enthalten. Demnach sind innerhalb der Rastausnehmung in einem Bereich, der in der Vollraststellung axial zwischen den zwei Rastelementen liegt, radial vorstehende Stützmittel angeordnet, wobei diese Stützmittel gerade auch im Bereich der axial sehr breiten Rastausnehmung eine verbesserte Führung des Steckerschaftes innerhalb der Aufnahmeöffnung zur Reduzierung eines möglichen Kippwinkels zwischen der Steckerachse und der Öffnungsachse bewirken.

In zweckmäßiger Ausgestaltung der Erfindung sind die Stützmittel und das erste Rastelement in Anpassung aneinander derart ausgebildet, dass durch ihre Relativbewegung beim Überführen von der Vorraststellung in die Vollraststellung das erste Rastelement zwangsweise gegen seine radiale Federkraft radial und axial über den Bereich der Stützmittel hinweg bewegt wird. Da somit das erste Rastelement selbsttätig radial verdrängt wird, ist weiterhin bevorzugt vorgesehen, dass die Stützmittel mit ihrem dem Doppelrastelement radial zugewandten Stützbereich zumindest im umfänglichen Eingriffsbereich der Rastelemente derart um einen radialen Versatz gegenüber der Halteflanke der Rastausnehmung versetzt sind, dass während der Einsteckbewegung beim Überführen zwischen Vor- und Vollraststellung zwischen dem ersten Rastelement und der Halteflanke stets eine radiale Überdeckung gewährleistet bleibt. Dadurch wird vorteilhafterweise sichergestellt, dass beim Überführen des Steckerteils von der Vorraststellung in die Vollraststellung das erste Rastelement nicht so weit radial aus der Rastausnehmung bewegt wird, dass im Falle einer eventuellen unabsichtlichen Freigabe des Steckerteils auf Grund einer insbesondere druckbedingten Beschleunigung und einer schnellen Bewegung in Löserichtung das erste Rastelement so schnell nicht wieder radial in der Vorraststellung einrasten könnte. Der Stecker würde dann praktisch über die Vorraststellung "hinausschießen" und sich vollständig aus dem Gehäuseteil lösen. Im Gegensatz dazu wird durch die bevorzugte Ausgestaltung erreicht, dass das erste Rastelement beim Überführen von der Vorraststellung in die Vollraststellung zwar radial in Richtung aus der Rastausnehmung hinaus, dabei aber nicht so weit radial bewegt wird, wie beim anfänglichen Einstecken des Steckerteils bis zum Hinterrasten der Halteflanke der Rastausnehmung. Deshalb besteht auch während des Überführens aus der Vorraststellung in die Vollraststellung stets eine zumindest geringfügige radiale Flächenüberdeckung zwischen dem ersten Rastelement und der Halteflanke der Rastausnehmung. Daraus resultiert eine hohe Sicherheit gegen vollständiges Lösen, auch wenn bei schon vorhandenem Druckmittel-Systemdruck das Steckerteil beim Steckvorgang dann losgelassen werden sollte, wenn das zweite Rastelement noch nicht die Raststufe hinterrastet hat; in diesem Fall würde der Stecker jedenfalls durch den aus dem bevorzugten Versatz resultierenden Überdeckungsbereich zwischen dem ersten Rastelement und der Halteflanke gehalten ("gefangen") werden.

Im Rahmen der Erfindung sind hinsichtlich der Anordnung des Doppelrastelementes beide Ausführungsvarianten möglich, wie sie bezüglich des einzelnen Rastelementes auch in dem Dokument EP 0 226 689 B1 enthalten sind. So kann das Doppelrastelement wahlweise innerhalb der Aufnahmeöffnung des Gehäuseteils oder am Steckerschaft gelagert sein. Bei der ersten Variante mit innerhalb der Aufnahmeöffnung gelagertem Doppelrastelement ist die Rastausnehmung mit den erfindungsgemäßen Stützmitteln am Steckerschaft gebildet. Bei der alternativen Ausbildung mit am Steckerschaft gelagertem Doppelrastelement sind die Rastausnehmung und die Stützmittel innerhalb der Aufnahmeöffnung des Gehäuseteils gebildet.

Weitere vorteilhafte Ausgestaltungsmerkmale der Erfindung sind in den abhängigen Ansprüchen sowie in der folgenden Beschreibung enthalten.

Anhand von in der Zeichnung dargestellten, bevorzugten Ausführungsbeispielen und bestimmten Ausführungsvarianten soll im Folgenden die Erfindung genauer erläutert werden. Dabei zeigen:
- Fig. 1: eine erste Ausführungsform einer erfindungsgemäßen Steckkupplung mit axial geschnittener Darstellung des Gehäuseteils und nicht geschnittener Ansicht des Steckerteils in einer Stellung beim Einstecken vor Erreichen der Vorraststellung,
- Fig. 2: eine Ansicht analog zu Fig. 1 in der Vorraststellung, wobei nur ein Teil des Gehäuseteils dargestellt ist,
- Fig. 3: eine Ansicht wie in Fig. 2 in einer Zwischenstellung beim Überführen von der Vorraststellung zur Vollraststellung,
- Fig. 4: eine weitere Darstellung analog zu Fig. 2 und 3 in der Vollraststellung,
- Fig. 5 u. 6: zur Erläuterung der Wirkungsweise der Erfindung gegen-überstellende Darstellungen einerseits einer aus dem Stand der Technik bekannten, gattungsgemäßen Steckkupplung (Fig. 5) und andererseits einer erfindungsgemäßen Steckkupplung (Fig. 6),
- Fig. 7: eine alternative Ausführungsform der erfindungsgemäßen Steckkupplung im Halbaxialschnitt des Gehäuseteils und nicht geschnittener Halbansicht des Steckerteils in der Vorraststellung,
- Fig. 8: die Steckkupplung nach Fig. 7 in der Vollraststellung,
- Fig. 9: eine Ausführungsvariante zu Fig. 7 und 8 in der Vollraststellung.

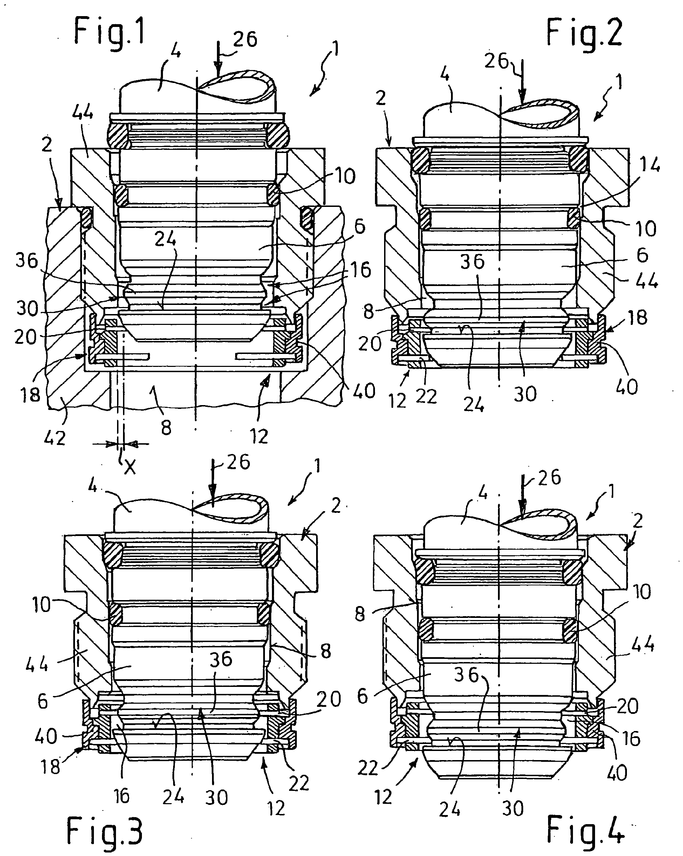

In den Figuren 1 bis 9 der Zeichnung sind gleiche Teile stets mit den gleichen Bezugszeichen versehen und werden daher in der Regel auch jeweils nur einmal beschrieben.

Eine erfindungsgemäße Steckkupplung 1 besteht aus zwei Kupplungsteilen, und zwar aus einem Gehäuseteil 2 und einem Steckerteil 4. Das Steckerteil 4 ist mit einem Steckerschaft 6 in eine Aufnahmeöffnung 8 des Gehäuseteils 2 einsteckbar und hierbei über mindestens einen Umfangs-Dichtring 10 gegen die Aufnahmeöffnung 8 abgedichtet sowie über eine Verriegelungseinrichtung 12 gegen Lösen arretierbar.

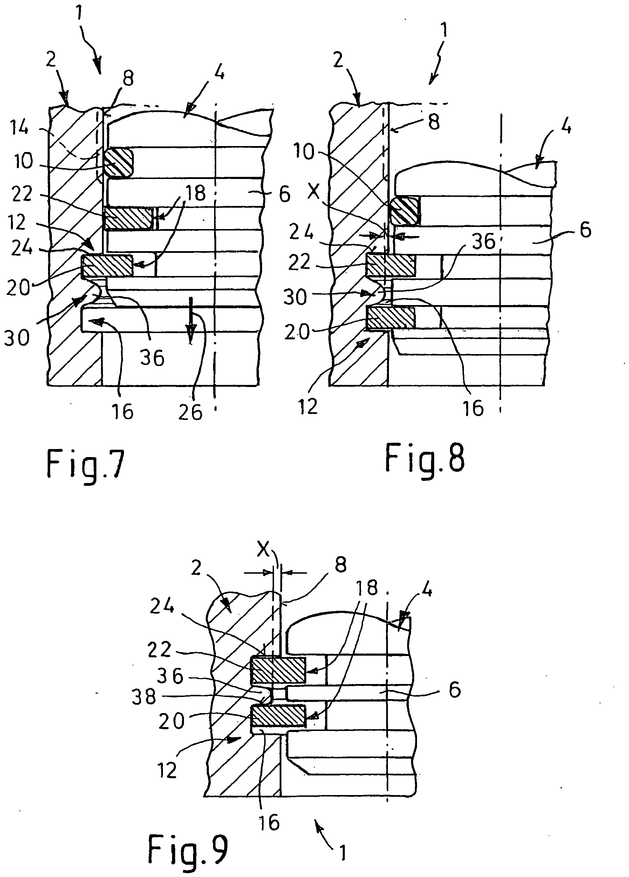

Die Verriegelungseinrichtung 12 ist derart ausgebildet, dass einerseits eine teilgesteckte Vorraststellung (s. Fig. 2 und 7) und andererseits eine ganz gesteckte Vollraststellung gewährleistet sind (s. Fig. 4, 8 und 9). In der bereits gegen Lösen formschlüssig arretierten Vorraststellung liegt eine derart unvollständige Abdichtung des Steckerschaftes 6 in der Aufnahmeöffnung 8 vor, dass im Falle einer Druckbeaufschlagung mit einem Druckmedium ein Signal, insbesondere ein akustisch wahrnehmbares Leckagegeräusch, erzeugt wird. In der Vollraststellung liegt demgegenüber eine vollständige, druckdichte Abdichtung vor. Bei der unvollständigen Abdichtung in der Vorraststellung handelt es sich um eine definiert begrenzte Undichtigkeit, indem durch eine bestimmte Anordnung des Dichtrings 10 zwischen dem Gehäuseteil 2 und dem Steckerteil 4 bzw. dem Steckerschaft 6 ein Leckagepfad 14 bzw. Drosselspalt gebildet ist, wodurch das Druckmedium, insbesondere Druckluft, dosiert ausströmen und dabei das Leckagegeräusch insbesondere als Pfeifen, Zischen oder dergleichen erzeugen kann. Dies kann dann als Signal dafür gewertet werden, dass noch nicht die korrekt gesteckte Vollraststellung erreicht ist, so dass in diesem Fall ausgehend von der Vorraststellung der Steckerschaft 6 durch weitergehendes Stecken in die Vollraststellung überführt werden kann.

Konstruktiv besteht dazu die Verriegelungseinrichtung 12 einerseits aus einer nutförmigen, radialen Rastausnehmung 16 des einen Kupplungsteils 2 oder 4 und andererseits aus einem Doppelrastelement 18 des anderen Kupplungsteils 4 oder 2. Das Doppelrastelement 18 weist zwei einzelne, radial federelastische und derart axial mit Abstand hintereinander angeordnete Rastelemente 20 und 22 auf, dass beim Einstecken des Steckerschaftes 6 in die Aufnahmeöffnung 8 zunächst in der Vorraststellung das erste Rastelement 20 durch radiale Bewegung und durch seine Federkraft radial in die Rastausnehmung 16 einrastet und dabei eine quer, insbesondere senkrecht zur Längsachse ausgerichtete Halteflanke 24 formschlüssig hintergreift. Bei fortgesetztem Einstecken in Pfeilrichtung 26 wird das erste Rastelement 20 in der Rastausnehmung 16 axial von der Halteflanke 24 entfernt, bis anschließend in der Vollraststellung das zweite Rastelement 22 gleichartig durch radiale Bewegung und durch seine Federkraft in die Rastausnehmung 16 einrastet und die Halteflanke 24 formschlüssig hintergreift. Dies lässt sich insbesondere anhand der beiden Stellungen in Fig. 2 und 4 sowie in Fig. 7 und 8 nachvollziehen.

Erfindungsgemäß ist nun vorgesehen, dass innerhalb der Rastausnehmung 16 in einem Bereich, der in der Vollraststellung (Fig. 4, 8 und 9) axial zwischen den zwei Rastelementen 20 und 22 liegt, radial vorstehende Stützmittel 30 zur Abstützung des Steckerschaftes 6 gegen Kippbewegungen bezüglich seiner Längsachse 32 relativ zur Längsachse 34 der Aufnahmeöffnung 8 angeordnet sind.

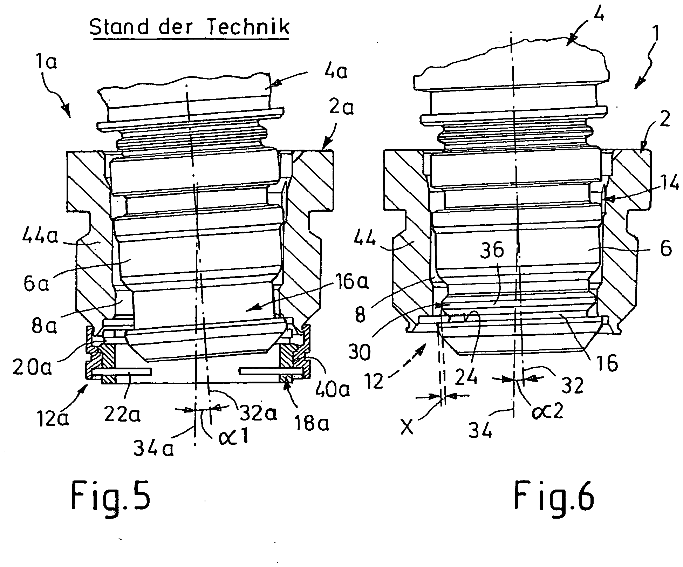

Zur weitergehenden Erläuterung wird auf die Figuren 5 und 6 verwiesen. In Fig. 5 ist eine aus dem Stand der Technik bekannte, gattungsgemäße Steckkupplung veranschaulicht, wobei die den übrigen Darstellungen der erfindungsgemäßen Steckkupplung entsprechenden Bestandteile jeweils mit den gleichen, aber mit dem Buchstaben "a" ergänzten Bezugszeichen versehen wurden. Es ist eine Stellung des Steckerschaftes 6a dargestellt, in der auf Grund der großen axialen Breite der Rastausnehmung 16a ein großer Schwenkwinkelbereich α1 der Steckerachse 32a relativ zur Öffnungsachse 34a möglich ist. Dieser Winkel α1 kann beispielsweise bis zu 5° betragen. Wie sich aus Fig. 6 ergibt, wird durch die erfindungsgemäßen Stützmittel 30 eine deutliche Reduzierung des möglichen Kippwinkels α2 erreicht. Konkret kann die Reduzierung etwa 50 % betragen, d. h. der Winkel α2 liegt in der Größenordnung zwischen 2, 5° und 3°.

In bevorzugter Ausgestaltung sind die Stützmittel 30 von einem umfangsgemäß durchlaufenden, ringstegförmigen oder wulstartigen Stützelement 36 gebildet. Alternativ dazu ist es in einer nicht dargestellten Ausführung ebenfalls möglich, als Stützmittel 30 mehrere über den Umfang insbesondere radialsymmetrisch verteilt angeordnete Stützelemente vorzusehen, z. B. in Form von kreisförmigen Erhebungen, Noppen, Zähnen oder dergleichen.

Die Stützmittel 30 und das erste Rastelement 20 sind dabei in Anpassung aneinander derart ausgebildet, dass durch ihre Relativbewegung beim Überführen des Steckerschaftes 6 von der Vorraststellung in die Vollraststellung das erste Rastelement 20 zwangsweise gegen seine radiale Federkraft radial und axial über die Stützmittel 30 hinweg bewegt wird. In der dargestellten Ausführung ist dazu das Stützelement 36 als Ringwulst mit einer in axialer Richtung konvex gekrümmten Fläche ausgebildet, so dass bei der Relativbewegung des Steckerschaftes 6 das erste Rastelement 20 über diese konvexe Oberfläche hinweg automatisch radial gegen seine Federkraft verdrängt wird und dann wieder durch seine Federkraft radial nach innen zurückfedert.

In weiterer zweckmäßiger Ausgestaltung sind die Stützmittel 30 mit ihrem dem Doppelrastelement 18 radial zugewandten Stützbereich - zumindest im umfänglichen Eingriffsbereich der Rastelemente 20, 22 - derart um einen radialen Versatz X gegenüber der entsprechenden Begrenzungskante der Halteflanke 24 der Rastausnehmung 16 versetzt, dass während der Einsteckbewegung beim Überführen zwischen Vorraststellung und Vollraststellung zwischen dem ersten Rastelement 20 und der Halteflanke 24 stets eine radiale Überdeckung gewährleistet bleibt. Dieser radiale Versatz X ist in den Zeichnungen stark überhöht veranschaulicht. Insofern sind die Zeichnungen nicht maßstäblich zu verstehen, sondern der Versatz X ist in Wirklichkeit sehr viel kleiner. Bezogen auf die radiale Breite der Halteflanke 24 bzw. bezogen auf die radiale Tiefe der Rastausnehmung 16 sollte der Versatz X etwa im Bereich von 15 % bis maximal 50 % liegen. Beispielsweise kann bei einer bestimmten Ausführung die Halteflanke 24 einen äußeren Durchmesser von 14,6 mm und einen inneren Durchmesser von 12,5 mm aufweisen. Daraus resultiert eine radiale Breite von 1,05 mm. Hierbei kann der Versatz X beispielsweise 0,2 mm bis 0,5 mm betragen. Diese Werte sind lediglich beispielhaft zu verstehen und beschränken die Erfindung nicht.

In der in Fig. 9 veranschaulichten Ausführungsvariante bilden die Stützmittel 30 eine zusätzliche, zweite Halteflanke 38, die in der Vollraststellung von dem ersten Rastelement 20 hintergriffen wird. Bei dieser Ausführung hat folglich das erste Rastelement 20 auch in der Vollraststellung eine Haltefunktion zusätzlich zu dem zweiten, die Halteflanke 24 hintergreifenden Rastelement 22. Das Vorsehen einer gleichartigen zweiten Halteflanke im Bereich der Stützmittel 30 ist natürlich analog auch bei der Ausführung gemäß Fig. 1 bis 4 möglich.

Bei der ersten Ausführung gemäß Fig. 1 bis 4 und 6 ist das Doppelrastelement 18 innerhalb der Aufnahmeöffnung 8 des Gehäuseteils 2 gelagert, während die Rastausnehmung 16 mit den Stützmitteln 30 am Steckerschaft 6 gebildet ist.

Als eine Art von "kinematischer Umkehr" ist in der Ausführung gemäß Fig. 7 bis 9 das Doppelrastelement 18 am Steckerschaft 6 gelagert, während die Rastausnehmung 16 mit den Stützmitteln 30 in der Aufnahmeöffnung 8 des Gehäuseteils 2 gebildet ist.

Wie sich weiterhin aus Fig. 1 bis 4 ergibt, können die Rastelemente 20, 22 des Doppelrastelementes 18 mit Vorteil in einem gemeinsamen käfigartigen Trägerelement 40 gelagert sein. Das Trägerelement 40 besteht vorzugsweise aus Kunststoff.

Jedes Rastelement 20, 22 ist bevorzugt als elastische Federklammer insbesondere aus Federstahlblech mit zwei im Wesentlichen kreisbogenförmigen Federarmen ausgebildet.

Wie sich noch insbesondere aus Fig. 1 ergibt, besteht das Gehäuseteil 2 bevorzugt derart aus (mindestens) zwei lösbar miteinander verbundenen Teilen, und zwar aus einem Basisteil 42 und einem in eine Öffnung des Basisteils 42 eingesetzten, im Wesentlichen hohlzylindrischen Einsatzteil 44, dass das verrastete Steckerteil 4 durch eine Demontage des Einsatzteils 44 lösbar ist. Dabei ist es weiterhin vorteilhaft, wenn das Einsatzteil 44 als Einschraubteil ausgebildet und mit einem Außengewinde in ein Innengewinde der Öffnung des Basisteils 42 eingeschraubt ist.

## Patentansprüche

1. Steckkupplung (1) für Druckmittel-Leitungen, bestehend aus zwei Kupplungsteilen (2, 4), und zwar aus einem Gehäuseteil (2) und einem Steckerteil (4), wobei das Steckerteil (4) mit einem mindestens einen Umfangs-Dichtring (10) aufweisenden Steckerschaft (6) abgedichtet in eine Aufnahmeöffnung (8) des Gehäuseteils (2) einsteckbar und über eine Verriegelungseinrichtung (12) gegen Lösen arretierbar ist, wobei die Verriegelungseinrichtung (12) derart ausgebildet ist, dass eine teilgesteckte Vorraststellung und eine ganz gesteckte Vollraststellung gewährleistet sind, wobei in der Vorraststellung durch eine bestimmte Anordnung des Dichtringes (10) relativ zu dem Gehäuseteil (2) eine unvollständige, eine Leckage des Druckmittels ermöglichende Abdichtung des Steckerschaftes (6) in der Aufnahmeöffnung (8) vorliegt, während in der Vollraststellung durch den Dichtring (10) des Steckerschaftes (6) eine vollständige Abdichtung gegeben ist, wobei die Verriegelungseinrichtung (12) einerseits aus einer radialen, von einer Halteflanke (24) begrenzten Rastausnehmung (16) des einen Kupplungsteils (2; 4) und andererseits aus einem Doppelrastelement (18) des anderen Kupplungsteils (4; 2) besteht, wobei das Doppelrastelement (18) zwei radial federelastische und derart axial hintereinander angeordnete Rastelemente (20, 22) aufweist, dass die Halteflanke (24) der Rastausnehmung (16) in der Vorraststellung von dem ersten Rastelement (20) und in der Vollraststellung von dem zweiten Rastelement (22) hintergriffen wird,
**dadurch gekennzeichnet, dass** innerhalb der Rastausnehmung (16) in einem Bereich, der in der Vollraststellung axial zwischen den zwei Rastelementen (20, 22) liegt, radial vorstehende Stützmittel (30) zur Abstützung des Steckerschaftes (6) gegen Kippbewegungen bezüglich seiner Längsachse (34) relativ zur Längsachse (34) der Aufnahmeöffnung (8) angeordnet sind.

2. Steckkupplung nach Anspruch 1,
**dadurch gekennzeichnet, dass** dieStützmittel(30)voneinem ringstegförmigen oder wulstartigen umfangsgemäßen Stützelement (36) oder von mehreren, über den Umfang insbesondere radialsymmetrisch verteilt angeordneten Stützelementen gebildet sind.

3. Steckkupplung nach Anspruch 1 oder 2,
**dadurch gekennzeichnet, dass** die Stützmittel (30) und das erste Rastelement (20) in Anpassung aneinander derart ausgebildet sind, dass durch ihre Relativbewegung beim Überführen von der Vorraststellung in die Vollraststellung das erste Rastelement (20) zwangsweise radial über die Stützmittel (30) bewegt wird.

4. Steckkupplung nach einem der Ansprüche 1 bis 3,
**dadurch gekennzeichnet, dass** dieStützmittel(30)mitihrem dem Doppelrastelement (18) radial zugewandten Stützbereich derart um einen radialen Versatz (X) gegenüber der Halteflanke (24) der Rastausnehmung (16) versetzt sind, dass während der Einsteckbewegung beim Überführen zwischen Vor- und Vollraststellung zwischen dem ersten Rastelement (20) und der Halteflanke (24) stets eine radiale Überdeckung gewährleistet bleibt.

5. Steckkupplung nach einem der Ansprüche 1 bis 4,
**dadurch gekennzeichnet, dass** die Stützmittel (30) eine zusätzliche, zweite Halteflanke (38) bilden, die in der Vollraststellung von dem ersten Rastelement (20) hintergriffen wird.

6. Steckkupplung nach einem der Ansprüche 1 bis 5,
**dadurch gekennzeichnet, dass** das Doppelrastelement (18)
- entweder innerhalb der Aufnahmeöffnung (8) des Gehäuseteils (2) gelagert ist wobei die Rastausnehmung (16) mit den Stützmitteln (30) am Steckerschaft (6) gebildet ist,
- oder am Steckerschaft (6) gelagert ist, wobei die Rastausnehmung (16) mit den Stützmitteln (30) in der Aufnahmeöffnung (8) des Gehäuseteils (2) gebildet ist.

7. Steckkupplung nach einem der Ansprüche 1 bis 6,
**dadurch gekennzeichnet, dass** dieRastelemente(20,22)des Doppelrastelementes (18) in einem gemeinsamen käfigartigen Trägerelement (40) gelagert sind.

8. Steckkupplung nach einem der Ansprüche 1 bis 7,
**dadurch gekennzeichnet, dass** jedes Rastelement (20, 22) als elastische Federklammer insbesondere aus Federstahlblech mit zwei im Wesentlichen kreisbogenförmigen Federarmen ausgebildet ist.

9. Steckkupplung nach einem der Ansprüche 1 bis 8,
**dadurch gekennzeichnet, dass** das Gehäuseteil (2) derart aus mindestens zwei lösbar miteinander verbundenen Teilen besteht, und zwar aus einem Basisteil (42) und einem in eine Öffnung des Basisteils (42) eingesetzten, im Wesentlichen hohlzylindrischen Einsatzteil (44), dass das verrastete Steckerteil (4) durch eine Demontage des Einsatzteils (44) lösbar ist.

10. Steckkupplung nach Anspruch 9,
**dadurch gekennzeichnet, dass** das Einsatzteil (44) als Einschraubteil ausgebildet und mit einem Außengewinde in ein Innengewinde der Öffnung des Basisteils (42) eingeschraubt ist.

## Claims

1. A plug-in coupling (1) for pressure-medium lines, consisting of two coupling parts (2, 4), namely a housing part (2) and a connector part (4), wherein the connector part (4) can be inserted in a sealed manner into a receiving opening (8) of the housing part (2) by means of a connector shaft (6) having at least one circumferential sealing ring (10) and is lockable against loosening via a locking device (12), wherein the locking device (12) is constructed in such a manner that a partially inserted prelocking position and an entirely inserted total locking position are guaranteed, wherein in the prelocking position there is incomplete sealing, enabling pressure-medium leakage, of the connector shaft (6) in the receiving opening (8) through a given arrangement of the sealing ring (10) relative to the housing part (2), whereas in the total locking position there is complete sealing by the sealing ring (10) of the connector shaft (6), wherein the locking device (12) on the one hand consists of a radial locking cut-out (16), bounded by a holding flank (24), of one coupling part (2; 4) and on the other hand consists of a double locking element (18) of the other coupling part (4; 2), wherein the double locking element (18) has two radially resilient locking elements (20, 22) arranged axially one after another in such a manner that the first locking element (20) engages behind the holding flank (24) of the locking cut-out (16) in the prelocking position and the second locking element (22) engages behind the holding flank (24) of the locking cut-out (16) in the total locking position, **characterised in that** within the locking cut-out (16), in a region lying axially between the two locking elements (20, 22) in the total locking position, radially projecting support means (30) are arranged to support the connector shaft (6) against tilting movements as regards its longitudinal axis (34) relative to the longitudinal axis (34) of the receiving opening (8).

2. A plug-in coupling according to claim 1, **characterised in that** the support means (30) are formed by an annular-web-shaped or bulge-like circumferential support element (36) or by a plurality of support elements arranged distributed over the circumference, in particular radially symmetrically.

3. A plug-in coupling according to claim 1 or 2, **characterised in that** the support means (30) and the first locking element (20) are adapted to one another in such a manner that through their relative motion, the first locking element (20) is forced to move radially over the support means (30) upon transfer from the prelocking position into the total locking position.

4. A plug-in coupling according to any one of claims 1 to 3, **characterised in that** by means of their support region radially facing the double locking element (18), the support means (30) are offset with respect to the holding flank (24) of the locking cut-out (16) by a radial offset (X) in such a manner that during the insertion motion there always remains guaranteed radial overlap between the first locking element (20) and the holding flank (24) upon transfer between the prelocking position and the total locking position.

5. A plug-in coupling according to any one of claims 1 to 4, **characterised in that** the support means (30) form an additional, second holding flank (38) which in the total locking position is engaged from behind by the first locking element (20).

6. A plug-in coupling according to any one of claims 1 to 5, **characterised in that** the double locking element (18)
- either is mounted within the receiving opening (8) of the housing part (2), wherein the locking cut-out (16) with the support means (30) is formed on the connector shaft (6),
- or is mounted on the connector shaft (6), wherein the locking cut-out (16) with the support means (30) is formed in the receiving opening (8) of the housing part (2).

7. A plug-in coupling according to any one of claims 1 to 6, **characterised in that** the locking elements (20, 22) of the double locking element (18) are mounted in a common cage-like carrier element (40).

8. A plug-in coupling according to any one of claims 1 to 7, **characterised in that** each locking element (20, 22) is in the form of a resilient spring clip, in particular of spring steel sheet, with two substantially arcuate spring arms.

9. A plug-in coupling according to any one of claims 1 to 8, **characterised in that** the housing part (2) consists of at least two parts, detachably connected to one another, namely a base part (42) and a substantially hollow-cylindrical insert (44), inserted into an opening of the base part (42), in such a manner that the locked connector part (4) is detachable through disassembly of the insert (44).

10. A plug-in coupling according to claim 9, **characterised in that** the insert (44) is in the form of a screw-in part and is screwed into an internal thread of the opening of the base part (42) by means of an external thread.

## Revendications

1. Elément de couplage enfichable (1) pour conduites de fluides sous pression, constitué de deux parties d'accouplement (2, 4), à savoir une partie de boîtier (2) et une partie de connecteur (4), dans lequel la partie de connecteur (4) peut être insérée, tout en étant étanchéifiée à l'aide d'une tige de connecteur (6) comportant au moins une bague d'étanchéité annulaire (10), dans une ouverture de logement (8) de la partie de boîtier (2) et bloquée contre le desserrage à l'aide d'un dispositif de verrouillage (12), moyennant le dispositif de verrouillage (12) est conçu de façon à ce qu'une position de pré-encliquetage partiellement insérée et une position d'encliquetage complet entièrement insérée soient garanties, dans lequel, dans la position de pré-encliquetage, grâce à une disposition déterminée de la bague d'étanchéité (10) par rapport à la partie de boîtier (2), une étanchéité incomplète de la tige de connecteur (6) permettant une fuite du fluide sous pression existe dans l'ouverture de logement (8), tandis que dans la position d'encliquetage complet, une étanchéité complète est garantie par la bague d'étanchéité (10) de la tige de connecteur (6), dans lequel le dispositif de verrouillage (12) est constitué d'une part d'un évidement d'encliquetage (16) radial d'une partie d'accouplement (2 ; 4), délimité par un flanc de maintien (24), et d'autre part d'un élément à double encliquetage (18) de l'autre partie d'accouplement (4 ;2), dans lequel l'élément à double encliquetage (18) présente deux éléments d'encliquetage (20, 22) radiaux élastiques et disposés l'un derrière l'autre axialement de façon à ce que le flanc de maintien (24) de l'évidement d'encliquetage (16) soit engagé dans la position de pré-encliquetage par le premier élément d'encliquetage (20) et dans la position d'encliquetage complet par le deuxième élément d'encliquetage (22),
**caractérisé en ce que**, à l'intérieur de l'évidement d'encliquetage (16), dans une zone qui se trouve, en position d'encliquetage complet, axialement entre les deux éléments d'encliquetage (20, 22), se trouvent des moyens d'appui (30) radiaux en saillie permettant de soutenir la tige de connecteur (6) contre des mouvements de basculement de son axe longitudinal (34) par rapport à l'axe longitudinal (34) de l'ouverture de logement (8).

2. Elément de couplage enfichable selon la revendication 1, **caractérisé en ce que** les moyens d'appui (30) sont constitués d'un élément d'appui (36) périphérique ayant la forme d'une nervure annulaire ou d'un bourrelet ou de plusieurs éléments d'appui disposés sur la circonférence, plus particulièrement répartis avec une symétrie radiale.

3. Elément de couplage enfichable selon la revendication 1 ou 2, **caractérisé en ce que** les moyens d'appui (30) et le premier élément d'encliquetage (20) sont conçus de manière adaptée de façon à ce que, grâce à leur mouvement relatif, lors du passage de la position de pré-encliquetage à la position d'encliquetage complet, le premier élément d'encliquetage (20) soit obligatoirement déplacé radialement au-dessus des moyens d'appui (30).

4. Elément de couplage enfichable selon l'une des revendications 1 à 3, **caractérisé en ce que** les moyens d'appui (30) sont décalés, avec leur zone d'appui orientée radialement vers l'élément de double encliquetage (18), d'un décalage radial (X) par rapport au flanc de maintien (24) de l'évidement d'encliquetage (16), de façon à ce que pendant le mouvement de connexion, lors du passage de la position de pré-encliquetage à la position d'encliquetage complet, une superposition radiale reste toujours garantie entre le premier élément d'encliquetage (20) et le flanc de maintien (24).

5. Elément de couplage enfichable selon l'une des revendications 1 à 4, **caractérisé en ce que** les moyens d'appui (30) constituent un deuxième flanc de maintien (38) supplémentaire, qui est engagé dans la position de pré-encliquetage par le premier élément d'encliquetage (20).

6. Elément de couplage enfichable selon l'une des revendications 1 à 5, **caractérisé en ce que** l'élément de double encliquetage (18)
- est logé à l'intérieur de l'ouverture de logement (8) de la partie de boîtier (2), l'évidement d'encliquetage (16) étant formé avec les moyens d'appui (30) sur la tige du connecteur (6), ou
- est logé sur la tige du connecteur (6), l'évidement d'encliquetage (16) étant formé avec les moyens d'appui (30) dans l'ouverture de logement (8) de la partie de boîtier (2).

7. Elément de couplage enfichable selon l'une des revendications 1 à 6, **caractérisé en ce que** les éléments d'encliquetage (20, 22) de l'élément de double encliquetage (18) sont logés dans un élément porteur commun (40) en forme de cage.

8. Elément de couplage enfichable selon l'une des revendications 1 à 7, **caractérisé en ce que** chaque élément d'encliquetage (20, 22) est conçu comme une pince élastique, constituée plus particulièrement de tôle élastique en acier avec deux bras élastiques ayant globalement la forme d'arcs de cercle.

9. Elément de couplage enfichable selon l'une des revendications 1 à 8, **caractérisé en ce que** la partie de boîtier (2) est constituée d'au moins deux parties reliées entre elles de manière amovible, à savoir d'une partie de base (42) et d'un insert (44) globalement cylindrique creux inséré dans une ouverture de la partie de base (42), de façon à ce que la partie connecteur (4) encliquetée puisse être retirée grâce à un démontage de l'insert (44).

10. Elément de couplage enfichable selon la revendication 9, **caractérisé en ce que** l'insert (44) est conçu comme une pièce vissée, et est vissée avec un filetage externe dans un filetage interne de l'ouverture de la partie de base (42).
